(19) Europäisches Patentamt
European Patent Office
Office européen des brevets

(11) **EP 3 150 991 B1**

(12) **FASCICULE DE BREVET EUROPEEN**

(45) Date de publication et mention de la délivrance du brevet:
**25.10.2017 Bulletin 2017/43**

(51) Int Cl.:
**G01N 21/31** $^{(2006.01)}$      **G01N 21/3504** $^{(2014.01)}$
**G01N 21/61** $^{(2006.01)}$

(21) Numéro de dépôt: **16191666.3**

(22) Date de dépôt: **30.09.2016**

(54) **PROCÉDÉ D'OPTIMISATION DE LONGUEURS D'ONDE DE DÉTECTION POUR UNE DÉTECTION MULTI-GAZ**

VERFAHREN ZUR OPTIMIERUNG DER DETEKTIONSWELLENLÄNGEN FÜR EINE MULTI-GAS-DETEKTION

METHOD FOR OPTIMISING DETECTION WAVELENGTHS FOR MULTI-GAS DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2015 FR 1559328**

(43) Date de publication de la demande:
**05.04.2017 Bulletin 2017/14**

(73) Titulaire: **COMMISSARIAT À L'ÉNERGIE ATOMIQUE ET AUX ÉNERGIES ALTERNATIVES 75015 Paris (FR)**

(72) Inventeurs:
• **LEFEBVRE, Anthony**
  **38170 SEYSSINET-PARISET (FR)**
• **BECKER, Sébastien**
  **38500 VOIRON (FR)**
• **BOUTAMI, Salim**
  **38100 GRENOBLE (FR)**

(74) Mandataire: **Brevalex**
  **95, rue d'Amsterdam**
  **75378 Paris Cedex 8 (FR)**

(56) Documents cités:
**US-A1- 2003 081 204**

• **LUCASIUS C B ET AL: "Genetic algorithms in wavelength selection: a comparative study", ANALYTICA CHIMICA ACTA, ELSEVIER, AMSTERDAM, NL, vol. 286, no. 2, 18 février 1994 (1994-02-18), pages 135-153, XP026594393, ISSN: 0003-2670, DOI: 10.1016/0003-2670(94)80155-X [extrait le 1994-02-18]**
• **XIAOBO Z ET AL: "Variables selection methods in near-infrared spectroscopy", ANALYTICA CHIMICA ACTA, ELSEVIER, AMSTERDAM, NL, vol. 667, no. 1-2, 14 mai 2010 (2010-05-14), pages 14-32, XP027038298, ISSN: 0003-2670 [extrait le 2010-05-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 3 150 991 B1**

## Description

## DOMAINE TECHNIQUE ET ART ANTÉRIEUR

L'invention concerne le domaine de la spectroscopie optique, et plus particulièrement celui de la détection d'espèces chimiques, en phase gazeuse ou liquide, par absorption spectrale.

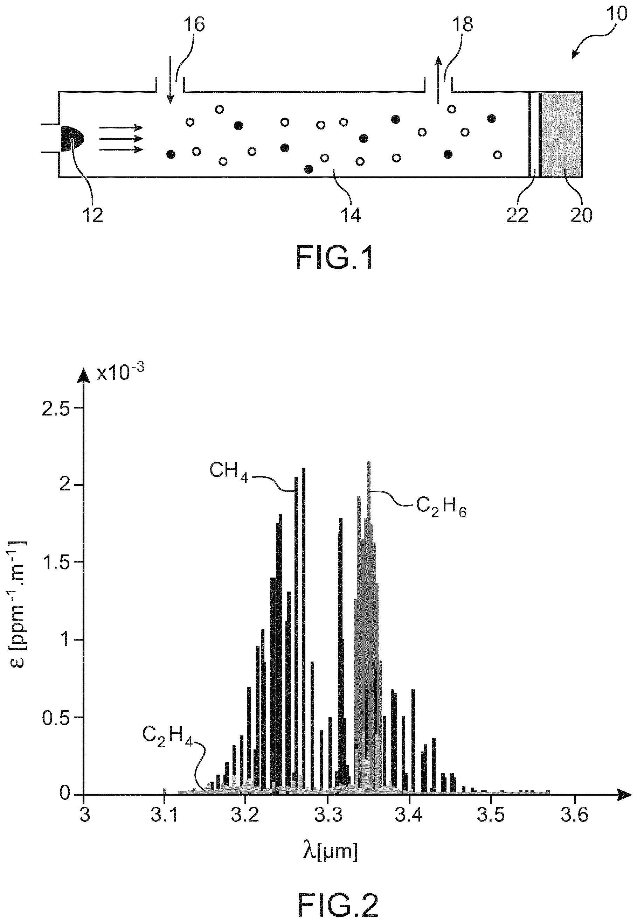

Un capteur de gaz optique, et plus particulièrement un capteur de type Non Dispersif Infra-Rouge (NDIR), permet de calculer la concentration d'un gaz en phase liquide ou vapeur. Il comporte une source infrarouge dont le rayonnement est dirigé à travers une cellule dans laquelle se trouve le gaz à détecter vers un détecteur qui est pourvu généralement d'un filtre spectral. La figure 1 représente schématiquement un tel capteur 10 comportant une source lumineuse infrarouge 12 disposée dans une cellule 14 munie d'une entrée 16 et d'une sortie 18 par lesquelles le gaz entre et sort de la cellule 14. Un rayonnement lumineux infrarouge émis par la source 12 est dirigé vers un détecteur 20 et passe à travers un filtre spectral 22 avant d'atteindre le détecteur 20. En variante, la source 12 peut être une source lumineuse laser et le capteur 10 ne comporte dans ce cas pas de filtre spectral en raison du caractère monochromatique de la lumière émise par une telle source.

La plupart des gaz possédant chacun une signature distincte dans le domaine moyen infrarouge (par exemple les longueurs d'ondes comprises entre environ 3 $\mu$m et 15 $\mu$m), une partie du rayonnement infrarouge émis par la source 12 dans le domaine MIR est absorbée par le gaz présent dans la cellule 14 et la baisse de l'intensité du signal lumineux qui résulte de cette absorption est quantifiée par comparaison avec une voie de référence, non sujette à cette variation. Ce phénomène est décrit par la loi de Beer-Lambert, qui stipule que :

$$T(\lambda) = \frac{I(\lambda)}{I_0(\lambda)} = 10^{-\varepsilon(\lambda)LC} \qquad (1)$$

avec $\lambda$ la longueur d'onde considérée, $T(\lambda)$ la transmittance à travers le gaz (c'est-à-dire sans prendre en compte le filtrage réalisé par le filtre spectral 22), $I(\lambda)$ l'intensité spectrale de sortie (mesurée par le détecteur), $I_0(\lambda)$ l'intensité spectrale d'entrée (émise par la source), $\varepsilon(\lambda)$ le coefficient d'absorption spectrale du gaz, L la longueur de cavité traversée par le rayonnement infrarouge et C la concentration du gaz dans la cavité.

La longueur L de la cavité est en général connue, tout comme le coefficient d'absorption spectrale $\varepsilon(\lambda)$ du gaz qui peut être mesuré via une calibration préalable. L'intensité spectrale d'entrée $I_0(\lambda)$ est plus difficile à mesurer et est souvent obtenue à partir d'une voie de référence. Cette voie de référence consiste généralement en un second capteur pourvu d'un filtre optique situé hors de l'absorption du gaz à mesurer, par exemple disposé dans une cellule différente de celle dans laquelle le gaz est injecté, et comprenant une source émettant un faisceau lumineux à une longueur d'onde $\lambda_R$. Cette voie de référence est par exemple formée d'éléments similaires aux éléments 12, 14, 20 et 22 du capteur 10, la différence étant par exemple qu'aucun gaz n'est présent dans la cellule de cette voie de référence. La transmittance $T(\lambda)$ de l'équation (1) est alors obtenue grâce à l'équation :

$$T(\lambda) = \left(\frac{I_{R0}(\lambda_R)}{I_{A0}(\lambda)}\right)\left(\frac{I_A(\lambda)}{I_R(\lambda_R)}\right) = 10^{-\varepsilon(\lambda)LC} \qquad (2)$$

avec $I_R(\lambda_R) = I_{R0}(\lambda_R)$ puisque le faisceau lumineux ne subit aucune absorption par le gaz dans cette voie de référence, et donc $I_A(\lambda) = I_{A0}(\lambda)10^{-\varepsilon(\lambda)LC}$ donné par l'équation (1). Ici, l'indice R indique la voie de référence, l'indice A la voie active et l'indice 0 une mesure à concentration nulle (au niveau de l'entrée de la cellule). La calibration du rapport $I_{R0}(\lambda_R)/I_{A0}(\lambda)$ et la mesure du rapport $I_A(\lambda)/I_R(\lambda_R)$ permet de calculer la transmittance $T(\lambda)$ à travers le gaz. En prenant le logarithme de cette transmittance $T(\lambda)$, il est possible de remonter à la concentration du gaz C :

$$C = -\frac{log\,T(\lambda)}{\varepsilon(\lambda)L} \qquad (3)$$

Lorsque l'absorption du gaz est faible, il est possible de linéariser l'équation (1) et la concentration C est alors approximativement proportionnelle au facteur (1-T).

Dans le cas où deux gaz différents sont destinés à être mesurés et discriminés l'un de l'autre, il est possible d'utiliser deux voies actives indépendantes, chacune possédant un filtre spectral positionné sur le spectre d'absorption de l'un des premier et second gaz (ou possédant chacune une source lumineuse laser émettant des faisceaux lumineux à des longueurs d'onde différentes centrées vis-à-vis des spectres d'absorption des gaz). Chaque voie permet alors d'obtenir une information sur la concentration du gaz pour laquelle elle a été conçue.

Cette approche n'est cependant valide que lorsqu'il n'y a pas de recouvrement entre les spectres d'absorption des deux gaz car sinon, il peut y avoir une confusion entre les deux gaz détectés à une certaine longueur d'onde, et donc une erreur possible sur le résultat obtenu. Afin de résoudre cette indétermination, il est nécessaire de croiser les réponses des deux capteurs. La loi de Beer-Lambert selon l'équation (1) ci-dessus s'écrit alors pour deux gaz :

$$\begin{cases} T(\lambda_1) = 10^{-(\varepsilon_1(\lambda_1)C_1+\varepsilon_2(\lambda_1)C_2)L} \\ T(\lambda_2) = 10^{-(\varepsilon_1(\lambda_2)C_1+\varepsilon_2(\lambda_2)C_2)L} \end{cases} \tag{4}$$

avec $\lambda_1$ correspondant à la longueur d'onde à laquelle la première mesure est réalisée (c'est-à-dire la longueur d'onde sur laquelle est positionné un premier filtre spectral du capteur dont la bande passante est de l'ordre de la largeur de la raie d'absorption du premier gaz, ou la longueur d'onde émise par une première source lumineuse laser du capteur), et $\lambda_2$ correspondant à la longueur d'onde à laquelle la deuxième mesure est réalisée (c'est-à-dire la longueur d'onde sur laquelle est positionné un deuxième filtre spectral du capteur dont la bande passante est de l'ordre de la largeur de la raie d'absorption du deuxième gaz, ou la longueur d'onde émise par une deuxième source lumineuse laser du capteur). Des équations (4), on en déduit deux équations à deux inconnues qui peuvent être résolues, pour déterminer les concentrations $C_1$ et $C_2$ des deux gaz :

$$\begin{cases} C_1 = -\dfrac{1}{L} \dfrac{\varepsilon_2(\lambda_2)\log T(\lambda_1)-\varepsilon_2(\lambda_1)\log T(\lambda_2)}{\varepsilon_1(\lambda_1)\varepsilon_2(\lambda_2)-\varepsilon_1(\lambda_2)\varepsilon_2(\lambda_1)} \\ C_2 = -\dfrac{1}{L} \dfrac{\varepsilon_1(\lambda_1)\log T(\lambda_2)-\varepsilon_1(\lambda_2)\log T(\lambda_1)}{\varepsilon_1(\lambda_1)\varepsilon_2(\lambda_2)-\varepsilon_1(\lambda_2)\varepsilon_2(\lambda_1)} \end{cases} \tag{5}$$

Dans le cas où $\varepsilon_1(\lambda_2) = \varepsilon_2(\lambda_1) = 0$ (pas de recouvrement entre les spectres d'absorption des deux gaz aux longueurs d'onde $\lambda_1$ et $\lambda_2$), les équations ci-dessus se simplifient en deux équations (3) indépendantes. Dans le cas contraire, une confusion entre les gaz détectés est possible.

Le cas ci-dessus peut s'appliquer à la détection de $n$ gaz, avec $n > 2$. Un système de $n$ équations à $n$ inconnues, qui peut être résolu via diverses techniques, est alors obtenu. Comme indiqué dans le document de C.W. Brown et al., « Matrix représentations and criteria for selecting analytical wavelengths for multicomponent spectroscopic analysis », Anal. Chem. 1982, 54(9), pp. 1472-1479, un tel système peut être posé de façon matricielle, les équations (1) et (4) pour $n$ gaz pouvant alors s'écrire :

$$\log\begin{pmatrix} T(\lambda_1) \\ T(\lambda_2) \\ \vdots \\ T(\lambda_n) \end{pmatrix} = -\begin{pmatrix} \varepsilon_1(\lambda_1) & \varepsilon_2(\lambda_1) & \cdots & \varepsilon_n(\lambda_1) \\ \varepsilon_1(\lambda_2) & \varepsilon_2(\lambda_2) & \cdots & \varepsilon_n(\lambda_2) \\ \vdots & \vdots & \ddots & \vdots \\ \varepsilon_1(\lambda_n) & \varepsilon_2(\lambda_n) & \cdots & \varepsilon_n(\lambda_n) \end{pmatrix} \begin{pmatrix} LC_1 \\ LC_2 \\ \vdots \\ LC_n \end{pmatrix} \tag{6}$$

Cette équation (6) peut s'écrire de façon plus condensée :

$$\log(\boldsymbol{T}) = -(\boldsymbol{\varepsilon})(\boldsymbol{LC}) \tag{7}$$

Dans l'équation (7) ci-dessus, $\boldsymbol{T}$ et $\boldsymbol{LC}$ correspondent à des vecteurs et $\varepsilon$ correspond à une matrice appelée matrice d'absorptivité. Au vu de l'équation (7), il apparait qu'obtenir le vecteur $\boldsymbol{LC}$ revient à une simple inversion de matrice, permettant donc d'obtenir finalement :

$$(\boldsymbol{LC}) = -(\boldsymbol{\varepsilon}^{-1})\log(\boldsymbol{T}) \tag{8}$$

En théorie, il suffit que la matrice $\varepsilon$ soit inversible pour garantir l'unicité du vecteur de solution $\boldsymbol{LC}$. Autrement dit, le passage de l'équation (7) à l'équation (8) est possible si les valeurs des colonnes de la matrice $\varepsilon$ sont indépendantes, c'est-à-dire s'il n'existe pas de combinaison linéaire pour passer des valeurs des coefficients d'absorption spectrale d'une colonne (relatives à l'un des gaz) aux valeurs des coefficients d'absorption spectrale des autres colonnes (relatives aux autres gaz) de la matrice $\varepsilon$. Cependant, le positionnement des mesures réalisées pour obtenir les valeurs du vecteur **T**, c'est-à-dire les valeurs $\lambda_i$, influe fortement sur la précision du résultat obtenu. En effet, une erreur due à un bruit de mesure se propage sur le résultat qui correspond à la valeur de concentration affichée. Ainsi, en considérant le cas de deux mesures réalisées pour deux gaz aux longueurs d'onde $\lambda_1$ et $\lambda_2$, plus les ratios $\varepsilon_1(\lambda_1)/\varepsilon_2(\lambda_1)$ et $\varepsilon_2(\lambda_2)/\varepsilon_1(\lambda_2)$ sont élevés, plus la mesure est fiable.

Dans les documents US 5 041723, US 4 914 719, US 5 281 817 et US 6 307 201, différentes méthodes sont proposées pour choisir les valeurs des longueurs d'onde $\lambda_i$ sur lesquelles les filtres du capteur sont positionnés ou correspondant aux longueurs émises par les sources lumineuses laser du capteur. Ces approches sont toutefois relativement empiriques et ne peuvent pas être généralisées à n'importe quel nombre et type de gaz à détecter.

Le document US 2003/0081204 divulgue un procédé d'optimisation de valeurs de $n$ longueurs d'onde de détection d'un capteur optique apte à réaliser une détection de $n$ colorants différents, comportant la mise en oeuvre des étapes suivantes : a) détermination d'une valeur de stabilité d'une inverse d'une matrice d'absorptivité $S$ dont des coefficients $S_{i,j}$ sont représentatifs de l'absorptivité spectrale de chacun des $i = 1, ..., n$ colorants aux $j = 1, ..., n$ longueurs d'onde de détection, ladite valeur de stabilité étant déterminée par le calcul d'une valeur du déterminant de la matrice d'absorptivité $S$ et la division de ladite valeur du déterminant par $\Sigma i=1^N \Sigma j=1^N (S_{i,j})^2$, l'étape a) étant répétée plusieurs fois en modifiant à chaque fois au moins une des valeurs desdites $n$ longueurs d'onde de détection et telle que les valeurs desdites $n$ longueurs d'onde de détection soient comprises dans une gamme de valeurs pour laquelle l'absorptivité spectrale d'au moins un des $n$ colorants est non nulle ; b) détermination des valeurs desdites $n$ longueurs d'onde de détection pour lesquelles la valeur de stabilité de l'inverse de la matrice $S$ correspond à la valeur maximale parmi l'ensemble des valeurs calculées lors de l'étape a).

Le document C. B. Lucasius et al., " Genetic algorithms in wavelength sélection: a comparative study ", Analytica Chimica Acta, 286(1994), pp. 135-153, présente une comparaison de plusieurs techniques pour choisir les longueurs d'onde optimales, notamment "genetic algorithms (GA)", "stepwise élimination (SE)" et "simulated annealing (SA)", basées sur différents facteurs de mérite, tels que des facteurs de mérite selon Lorber et le minimum des moyens des erreurs carrées selon Sasaki.

Le document Z. Xiabao et al., " Variables sélection methods in near-infrared spectroscopy ", Analytica Chimica Acta, 667(2010), pp. 14-32 est un récapitulatif de procédés de sélection de variables dans le domaine de la spectroscopie proche infrarouge.

## EXPOSÉ DE L'INVENTION

Un but de la présente invention est de proposer un procédé permettant de déterminer des valeurs optimales de longueurs d'onde de détection, c'est-à-dire les longueurs d'onde sur lesquelles des filtres spectraux du capteur sont destinés à être positionnés ou les longueurs d'onde de faisceaux lumineux destinés à être émis par des sources lumineuses laser du capteur), pour réduire au maximum l'incidence des bruits de mesure sur le résultat obtenu, et cela quel que soit le nombre $n$ de gaz à détecter et quels que soient leurs spectres d'absorption, que ces spectres se recouvrent ou non.

Pour cela, la présente invention propose un procédé d'optimisation de valeurs de $n$ longueurs d'onde de détection d'un capteur de gaz optique apte à réaliser une détection de $n$ gaz différents, comportant la mise en oeuvre des étapes suivantes :

a) calcul d'une valeur d'un déterminant d'une matrice d'absorptivité $\varepsilon$ dont des coefficients sont représentatifs de l'absorptivité spectrale de chacun des $n$ gaz aux $n$ longueurs d'onde de détection, l'étape a) étant répétée plusieurs fois en modifiant à chaque fois au moins une des valeurs desdites $n$ longueurs d'onde de détection et telle que les valeurs desdites $n$ longueurs d'onde de détection soient comprises dans une gamme de valeurs pour laquelle l'absorptivité spectrale d'au moins un des $n$ gaz est non nulle ;

b) détermination des valeurs desdites $n$ longueurs d'onde de détection pour lesquelles la valeur du déterminant de la matrice d'absorptivité $\varepsilon$ correspond à la valeur maximale parmi l'ensemble des valeurs calculées lors de l'étape a).

Ainsi, l'invention propose un procédé permettant, à l'aide d'un calcul d'erreur utilisant judicieusement la matrice d'absorptivité $\varepsilon$, de choisir de façon optimale les longueurs d'onde de détection auxquelles les mesures sont destinées à être réalisées par le capteur afin de discriminer la présence de différents gaz lors d'une mesure spectroscopique par absorption.

Contrairement aux procédés de l'art antérieur se basant sur des méthodes essentiellement empiriques, le procédé selon l'invention peut s'appliquer à n'importe quel nombre de gaz et à n'importe quel type de gaz. De plus, ce procédé peut s'appliquer autant à un capteur de gaz optique de type NDIR ou multi-spectral.

Dans une première configuration, le procédé peut être tel que :

- le capteur de gaz optique comporte au moins n sources lumineuses laser,
- les coefficients de la matrice d'absorptivité $\varepsilon$ correspondent, ou sont uniformément proportionnels, aux coefficients d'absorption spectrale de chacun des *n* gaz aux *n* longueurs d'onde de détection, et
- les valeurs des *n* longueurs d'onde de détection déterminées à l'étape b) correspondent à des longueurs d'onde de faisceaux lumineux aptes à être émis par les *n* sources lumineuses laser.

Dans une deuxième configuration, le procédé peut être tel que :

- le capteur de gaz optique comporte au moins une source lumineuse polychromatique et au moins *n* filtres spectraux chacun apte à permettre une détection d'un des *n* gaz,
- les coefficients de la matrice d'absorptivité $\varepsilon$ correspondent, ou sont uniformément proportionnels, aux coefficients d'absorption spectrale moyens de chacun des *n* gaz, pondérés ou non par des réponses spectrales des *n* filtres spectraux, et
- les valeurs des *n* longueurs d'onde de détection déterminées à l'étape b) correspondent à des longueurs d'onde sur lesquelles les réponses spectrales des *n* filtres spectraux sont positionnées.

Dans ce cas, les coefficients, notés $\tilde{\varepsilon}_j(\lambda_i)$, de la matrice d'absorptivité $\varepsilon$ sont tels que :

$$\tilde{\varepsilon}_j(\lambda_i) = \frac{\int \varepsilon_j(\lambda) A_i(\lambda) S(\lambda) \mathrm{d}\lambda}{\int A_i(\lambda) S(\lambda)\, \mathrm{d}\lambda}$$

ou tels que :

$$\tilde{\varepsilon}_j(\lambda_i) = \int \varepsilon_j(\lambda) A_i(\lambda) S(\lambda) \mathrm{d}\lambda$$

avec $\lambda_i$ correspondant aux *n* longueurs d'onde de détection, i étant tel que $\le i \le n$;
$\varepsilon_j(\lambda)$ correspondant aux coefficients d'absorption spectrale des *n* gaz, j étant tel que $1 \le j \le n$ ;
$A_i(\lambda)$ correspondant aux réponses spectrales des *n* filtres spectraux;
$S(\lambda)$ correspondant au spectre d'émission de la source lumineuse.

Dans ce cas, le procédé peut être tel que :

- les *n* filtres spectraux sont choisis parmi un ensemble de *m* filtres spectraux, avec *m* > *n* dont un gabarit, une valeur de longueur d'onde sur laquelle la réponse spectrale est positionnée et une largeur de la réponse spectrale de chacun des filtres spectraux dudit ensemble de filtres sont prédéterminés, et
- les valeurs des *n* longueurs d'onde de détection sont choisies parmi les valeurs des longueurs d'onde sur lesquelles les réponses spectrales des filtres spectraux dudit ensemble de filtres sont positionnées.

Ainsi, ce procédé peut être appliqué pour choisir, parmi plusieurs filtres prédéfinis, ceux les plus adaptés pour réduire les erreurs suivant le nombre et la nature des gaz à détecter.

En variante, le procédé peut être tel que :

- les *n* filtres spectraux ont un même gabarit $A(\lambda)$, et
- les coefficients, notés $\tilde{\varepsilon}j(\lambda_i)$, de la matrice d'absorptivité $\varepsilon$ sont tels que :

$$\tilde{\varepsilon}_j(\lambda_i) = \frac{\int A_i(\lambda) \varepsilon_j(\lambda) S(\lambda) \mathrm{d}\lambda}{\int A_i(\lambda) S(\lambda)\, \mathrm{d}\lambda}$$

ou tels que :

$$\tilde{\varepsilon}_j(\lambda_i) = \int A_i(\lambda)\varepsilon_j(\lambda)S(\lambda)\mathrm{d}\lambda$$

avec $\lambda_i$ correspondant aux $n$ longueurs d'onde de détection, i étant tel que $\leq i \leq n$;
$\varepsilon_j(\lambda)$ correspondant aux coefficients d'absorption spectrale des $n$ gaz, j étant tel que $1 \leq j \leq n$ ;
$A_i(\lambda)$ correspondant aux réponses spectrales des $n$ filtres spectraux positionnées sur les longueurs d'onde $\lambda_i$ ;
$S(\lambda)$ le spectre d'émission de la source lumineuse.

Dans cette variante, le procédé sert à choisir, en utilisant pour la détection de chacun des $n$ gaz un filtre spectral d'un même gabarit et de même largeur de réponse spectrale, les positions des filtres les plus adaptées, c'est-à-dire les longueurs d'onde sur lesquelles les réponses spectrales des filtres spectraux sont positionnées, pour réduire les erreurs suivant le nombre et la nature des gaz à détecter.

Dans ce cas, le procédé peut être tel que :

- les largeurs des réponses spectrales des $n$ filtres spectraux sont ajustables,
- l'itération de l'étape a) est répétée plusieurs fois en modifiant à chaque fois la largeur des réponses spectrales des $n$ filtres spectraux, et
- l'étape b) détermine les valeurs des $n$ longueurs d'onde de détection pour lesquelles la valeur du déterminant de la matrice d'absorptivité $\varepsilon$ correspond à la valeur maximale parmi l'ensemble des valeurs calculées lors des multiples itérations de l'étape a).

Ainsi, le procédé permet d'optimiser également la largeur des réponses spectrales des $n$ filtres spectraux utilisés pour réduire les erreurs en fonction du nombre et de la nature des gaz à détecter.

Le procédé peut être tel que :

- le capteur de gaz optique ne comporte pas de voie de référence et comporte $n+1$ voies de mesure ;
- les coefficients de la matrice d'absorptivité $\varepsilon$ correspondent, ou sont uniformément proportionnels, aux coefficients d'absorption spectrale, moyens ou non, de chacun des $n$ gaz, pondérés ou non par des réponses spectrales des $n$ filtres spectraux, auxquels sont soustrait les coefficients d'absorption spectrale d'une des $n+1$ voies de mesure du capteur de gaz optique servant de voie de référence.

Ainsi, lorsque le capteur de gaz optique ne comporte pas de voie de référence permettant de réaliser une mesure d'absorption spectrale sans la présence de gaz dans cette voie, le procédé peut être tout de même mis en oeuvre en utilisant une des voies de mesure qui sert alors de voie de référence. La voie servant de référence peut correspondre à n'importe laquelle des voies de mesure du capteur. Cela revient à choisir de façon optimale $n+1$ longueurs d'onde de détection de façon à maximiser le déterminant de la matrice d'absorptivité $\varepsilon$.

Les étapes a) et b) peuvent être mises en oeuvre par exemple via une méthode d'optimisation de type solveur d'équations par algorithme évolutionnaire.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente un capteur de gaz optique de type NDIR ;
- la figure 2 représente les spectres d'absorption, ou coefficients d'absorption spectrale, de trois gaz destinés à être détectés par un capteur optimisé par la mise en oeuvre d'un procédé d'optimisation des valeurs des longueurs d'onde de détection du capteur, objet de la présente invention, selon mode de réalisation particulier;
- la figure 3 représente un gabarit de filtre du capteur optimisé par la mise en oeuvre du procédé d'optimisation des valeurs des longueurs d'onde de détection, objet de la présente invention, selon le mode de réalisation particulier;
- la figure 4 représente les produits de convolution du gabarit du filtre représenté sur la figure 3 avec les spectres d'absorption représentés sur la figure 2 ;
- la figure 5 représente des longueurs d'onde de détection calculées lors de la mise en oeuvre du procédé selon le mode de réalisation particulier, et superposées aux produits de convolution de la figure 4 ;
- la figure 6 représente des longueurs d'onde de détection calculées lors de la mise en oeuvre du procédé selon le mode de réalisation particulier et superposées aux spectres d'absorption de la figure 2.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Lors d'une mesure de concentrations de gaz par le capteur de gaz optique 10, telle que celle décrite précédemment, les principales sources d'erreurs proviennent de la source de rayonnement 12 et du détecteur 20 utilisés. En considérant que la source 12 émet une intensité spectrale $I \pm \sigma_{I_{source}}$, avec $\sigma_{I_{source}}$ correspondant au bruit de la source 12, et que le détecteur 20 rajoute un bruit $\sigma_{I_{capteur}}$, alors un signal $I \pm \sigma_I$ avec $\sigma_I^2 = \sigma_{I_{source}}^2 + \sigma_{I_{capteur}}^2$ est obtenu au final. Selon les cas, le terme du bruit issu de la source 12 ou du détecteur 20 prédomine, mais il est difficile de les dissocier. En pratique, il est plus facile de mesurer directement $\sigma_I$ comme l'écart type du signal mesuré par le capteur 10 en conditions fixes. En calculant la transmittance $T = I/I_0$, il est possible de définir un bruit $\sigma_T$ tel que :

$$\left(\frac{\sigma_T}{T}\right)^2 = \left(\frac{\sigma_I}{I}\right)^2 + \left(\frac{\sigma_{I_0}}{I_0}\right)^2 \qquad (9)$$

Dans le cas d'un capteur 10 apte à réaliser la détection de $n$ gaz, $n$ transmittances $T_i$ sont mesurées, chacune avec une imprécision $\sigma_{Ti}$ ($i \in [1 \dots n]$) donnée. Ces valeurs se retrouvent sur la diagonale de la matrice de covariance $\Sigma_T$ associée, les valeurs hors diagonales étant nulles :

$$(\boldsymbol{\Sigma_T}) = \begin{pmatrix} \sigma_{T1}^2 & 0 & \cdots & 0 \\ 0 & \sigma_{T2}^2 & \cdots & 0 \\ \vdots & \vdots & \ddots & \vdots \\ 0 & 0 & \cdots & \sigma_{Tn}^2 \end{pmatrix} \qquad (10)$$

L'erreur sur les transmittances créé une erreur sur les produits LC en se propageant à travers l'équation (8) et mène à la formule suivante pour la matrice de covariance de **LC :**

$$(\boldsymbol{\Sigma_{LC}}) = (\boldsymbol{\varepsilon^{-1}})(\boldsymbol{J_f})(\boldsymbol{\Sigma_T})(\boldsymbol{J_f})^T(\boldsymbol{\varepsilon^{-1}})^T \qquad (11)$$

Où $\boldsymbol{J_f}$ est la matrice jacobienne de la fonction $\mathbf{f} : \mathbb{R}^n \to \mathbb{R}^n$ définie par :

$$\mathbf{f}(T_1, \dots T_n) = \begin{cases} f_1(T_1, \dots T_n) \\ \vdots \\ f_n(T_1, \dots T_n) \end{cases} = \begin{cases} -\log T_1 \\ \vdots \\ -\log T_n \end{cases} \qquad (12)$$

La matrice jacobienne $\boldsymbol{J_f}$ de cette fonction **f** peut donc s'écrire selon l'équation :

$$\boldsymbol{J_f} = -\frac{1}{\ln 10} \begin{pmatrix} 1/T_1 & 0 & \cdots & 0 \\ 0 & 1/T_2 & \cdots & 0 \\ \vdots & \vdots & \ddots & \vdots \\ 0 & 0 & \cdots & 1/T_n \end{pmatrix} \qquad (13)$$

De plus, dans l'équation (11) ci-dessus, l'inverse de la matrice $\varepsilon$ peut s'exprimer en fonction de son déterminant et de sa comatrice par l'équation :

$$\varepsilon^{-1} = \frac{1}{det(\varepsilon)} \; {}^t com(\varepsilon) \tag{14}$$

Les formules générales ci-dessus sont valides quel que soit le nombre $n$ de gaz à détecter et peuvent être complétées s'il existe d'autres sources d'erreur. Plus spécifiquement, il est possible d'écrire la version étendue des variances de l'équation (11) dans le cas d'un capteur apte à réaliser la détection de deux gaz :

$$\begin{cases} \sigma_{LC_1}{}^2 = \left(\frac{1}{\ln 10(\varepsilon_{11}\varepsilon_{22}-\varepsilon_{21}\varepsilon_{12})}\right)^2 \left[\left(\frac{\varepsilon_{22}\sigma_{T1}}{T_1}\right)^2 + \left(\frac{\varepsilon_{12}\sigma_{T2}}{T_2}\right)^2\right] \\ \sigma_{LC_2}{}^2 = \left(\frac{1}{\ln 10(\varepsilon_{11}\varepsilon_{22}-\varepsilon_{21}\varepsilon_{12})}\right)^2 \left[\left(\frac{\varepsilon_{21}\sigma_{T1}}{T_1}\right)^2 + \left(\frac{\varepsilon_{11}\sigma_{T2}}{T_2}\right)^2\right] \end{cases} \tag{15}$$

En utilisant les expressions de l'équation (11), il est possible d'évaluer précisément l'erreur sur toutes les concentrations à mesurer en fonction des valeurs de la matrice $\varepsilon$ correspondantes aux différentes raies d'absorption des gaz et des concentrations des différents gaz. Il est donc possible de sélectionner n longueurs d'onde autour desquelles les $n$ filtres doivent être positionnés (à partir de la matrice $\varepsilon$ correspondante) de façon à respecter un cahier des charges bien défini : toutes les erreurs en dessous d'une valeur seuil, une précision différente pour chaque gaz, etc. Du fait qu'un filtre correspond à un gabarit qui peut être translaté sur une plage de longueurs d'onde, le positionnement des filtres correspond au positionnement de son gabarit par rapport à une longueur d'onde de référence. Cette longueur d'onde de référence peut changer selon la forme du gabarit du filtre. Par exemple, le positionnement d'un filtre gaussien, ou tout autre filtre dont le gabarit est symétrique par rapport à une longueur d'onde centrale, peut se faire en choisissant comme longueur d'onde de référence la longueur d'onde centrale de la réponse spectrale du filtre. Pour un filtre de type passe-haut ou passe-bas, la longueur d'onde de référence peut correspondre par exemple à la longueur d'onde de coupure filtre.

Cependant, dans le cas général, il est difficile d'optimiser le système avec les $n$ valeurs diagonales de la matrice ($\Sigma_{LC}$). Par exemple, dans les variances exprimées à l'équation (15), celles-ci comportent deux termes distincts : le premier est proportionnel à l'inverse du déterminant au carré (correspondant aux termes $\left(\frac{1}{\ln 10(\varepsilon_{11}\varepsilon_{22}-\varepsilon_{21}\varepsilon_{12})}\right)^2$ pour $\sigma_{LC_1}{}^2$ et $\sigma_{LC_2}{}^2$), et le second tient compte des erreurs en l'absence de gaz sur la transmittance et contient des cofacteurs de la matrice $\varepsilon$ au carré (correspondant aux termes $\left[\left(\frac{\varepsilon_{22}\sigma_{T1}}{T_1}\right)^2 + \left(\frac{\varepsilon_{12}\sigma_{T2}}{T_2}\right)^2\right]$ pour $\sigma_{LC_1}{}^2$ et $\left[\left(\frac{\varepsilon_{21}\sigma_{T1}}{T_1}\right)^2 + \left(\frac{\varepsilon_{11}\sigma_{T2}}{T_2}\right)^2\right]$ pour $\sigma_{LC_2}{}^2$).

Pour diminuer l'ensemble des erreurs, il est proposé de maximiser le déterminant dans les premiers termes mentionnés ci-dessus. Le déterminant de la matrice d'absorptivité $\varepsilon$ est donc utilisé comme indicateur de performance pour la sélection des longueurs d'onde à utiliser pour la détection des gaz. Plus celui-ci est élevé en valeur absolue, plus l'erreur générale sur la détermination des concentrations est faible.

De manière générale, le procédé d'optimisation de valeurs de $n$ longueurs d'onde de détection d'un capteur de gaz optique apte à réaliser une détection de $n$ gaz différents comporte la mise en oeuvre des étapes suivantes :

a) calcul de la valeur du déterminant de la matrice d'absorptivité $\varepsilon$ dont des coefficients sont représentatifs de l'absorptivité spectrale de chacun des $n$ gaz aux $n$ longueurs d'onde de détection, l'étape a) étant répétée plusieurs fois en modifiant à chaque fois au moins une des valeurs desdites $n$ longueurs d'onde de détection et telle que les valeurs desdites *n* longueurs d'onde de détection soient comprises dans une gamme de valeurs pour laquelle l'absorptivité spectrale d'au moins un des *n* gaz est non nulle ;

b) détermination des valeurs desdites *n* longueurs d'onde de détection pour lesquelles la valeur du déterminant de la matrice d'absorptivité $\varepsilon$ correspond à la valeur maximale parmi l'ensemble des valeurs calculées lors de l'étape a).

L'ensemble des longueurs d'onde de détection potentielles sont donc évaluées en cherchant à maximiser ce déterminant. Pour un nombre de gaz *n* faible, par exemple pour $n \leq 4$, il est possible de recourir à une méthode exhaustive et tester toutes les longueurs d'onde de détection possibles. Pour un nombre de gaz *n* élevé, par exemple pour $n \geq 5$, une méthode d'optimisation de type solveur d'équations peut être utilisée, correspondant par exemple à des algorithmes évolutionnaires tels que l'algorithme PSO, ou « Particle Swarm Optimization », décrit dans le document de J. Kennedy et al., « Particle Swarm Optimization », Neural Networks, 1995. Proceedings., IEEE International Conference on, vol. 4, pp. 1942-1948, ou l'algorithme CMAES, ou « Covariance Matrix Adaptation Evolution Strategy », décrit dans le document de N. Hansen, « The CMA évolution strategy : A tutorial ».

Eventuellement, une fois le déterminant de valeur maximale trouvé, il est possible de calculer les valeurs exactes des erreurs sur les transmittances à partir de l'équation (11) afin de vérifier que les valeurs déterminées n'engendrent pas de problème de saturation.

La méthode décrite ci-dessus donne de bons résultats pour un jeu de $\lambda_i$ discrets, et est adaptée lorsque le capteur comporte des sources lumineuses laser qui sont monochromatiques. Dans ce cas, le procédé permet d'identifier les longueurs d'onde $\lambda_i$ optimales à émettre par les *n* sources lumineuses laser du capteur.

Lorsqu'une source lumineuse polychromatique est utilisée avec des filtres de largeurs spectrales supérieures à celles des raies d'absorption des gaz à détecter, au lieu d'utiliser directement les valeurs des coefficients d'absorption spectrale $\varepsilon(\lambda)$ des gaz dans la matrice d'absorptivité $\varepsilon$, les coefficients de la matrice d'absorptivité $\varepsilon$ sont choisis comme correspondant aux coefficients d'absorption spectrale moyens de chacun des *n* gaz pondérés par les réponses spectrales des *n* filtres spectraux. Ces coefficients sont calculés selon l'équation suivante :

$$\tilde{\varepsilon}_j(\lambda_i) = \frac{\int \varepsilon_j(\lambda) A_i(\lambda) S(\lambda) d\lambda}{\int A_i(\lambda) S(\lambda) d\lambda} \qquad (16)$$

avec $\tilde{\varepsilon}_j(\lambda_i)$ le coefficient d'absorption spectrale moyen du gaz *j* par rapport à un filtre spectral dont la réponse spectrale type $A_i$ est positionnée sur la longueur d'onde $\lambda_i$, et $S(\lambda)$ le spectre d'émission de la source lumineuse. Les indices i et j sont tels que $1 \leq i \leq n$ et $1 \leq j \leq n$. Le terme $\varepsilon_j(\lambda)$ correspond au coefficient d'absorption spectrale du gaz j. Le calcul des coefficients $\tilde{\varepsilon}_j(\lambda_i)$ est réalisé en intégrant la formule (16) ci-dessus sur tout le domaine où $\varepsilon_j(\lambda)$ et $A_i(\lambda)$ sont sensiblement non nuls, ce qui revient généralement à réaliser cette intégration sur le domaine correspondant à la largeur du filtre jusqu'à ce que $A_i(\lambda)$ soit quasi nul.

L'application de l'équation (16) ci-dessus correspond à l'application d'un filtre d'un gabarit type donné (A), ce filtre étant répété pour différentes valeurs de $\lambda_i$ pour simuler plusieurs positionnements de filtres. Dans un mode de réalisation particulier, lorsque les filtres à utiliser dans le capteur sont choisis parmi un ensemble donné de filtres dont les fonctions de transfert, ou réponses spectrales, sont définies (gabarit, largeur et longueur d'onde centrale définies), il est possible de calculer les valeurs $\tilde{\varepsilon}_{ij}$ correspondantes et de trouver le sous-ensemble de filtres qui permettent de maximiser la valeur du déterminant de la matrice d'absorptivité $\varepsilon$. Les filtres les plus optimaux parmi ceux disponibles sont ainsi identifiés pour être utilisés dans le capteur.

Lorsque les positions des filtres spectraux, c'est-à-dire les longueurs d'onde sur lesquelles les réponses spectrales des filtres sont positionnées, ne sont pas définies et qu'elles peuvent être choisies, mais que les filtres spectraux ont un gabarit et une largeur définis (c'est-à-dire s'il est possible de positionner spectralement un filtre de réponse spectrale de forme *A* sur n'importe quelle longueur d'onde $\lambda_i$ comme dans le cas de filtres interférentiels dont les paramètres de filtrage sont modifiés en modifiant les paramètres des couches utilisées pour les réaliser), alors il est possible de construire la fonction $\tilde{\varepsilon}_j(\lambda_i)$ en utilisant l'équation (16) précédente pour scanner toutes les valeurs possibles de positionnement $\lambda_i$ dans la gamme d'intérêt.

Dans le cas où, en plus de la position libre des filtres spectraux, les largeurs des réponses spectrales des filtres sont variables, l'opération décrite ci-dessus peut être répétée pour chaque largeur possible de la réponse spectrale des filtres, et choisir les filtres optimums en faisant varier ces deux paramètres pour la création de la matrice $\varepsilon$. Il est dans ce cas possible de réduire encore plus l'erreur en faisant correspondre les largeurs de filtres aux largeurs de raies d'absorption (par exemple en considérant la largeur à mi-hauteur des raies d'absorption).

Cependant, la possibilité d'avoir différentes largeurs de filtres va faire converger la recherche vers des filtres très étroits dont l'émissivité moyenne est plus importante. Dans le cas où la puissance spectrale délivrée par la source lumineuse est limitée (cas d'une source assimilable à un corps noir par exemple), cela signifie aussi réduire l'intensité spectrale du signal et augmenter l'erreur si le bruit est constant.

Lorsque les positions des filtres sont prédéfinies et ne sont pas modifiables, les coefficients de la matrice d'absorptivité $\varepsilon$ peuvent être calculés selon l'équation suivante :

$$\tilde{\varepsilon}_j(\lambda_i) = \int \varepsilon_j(\lambda) A_i(\lambda) S(\lambda) \mathrm{d}\lambda \qquad (17)$$

Ainsi, il est possible de facilement prendre en compte la quantité de flux lumineux qui atteint le détecteur et qui est proportionnelle au terme $\int A_i(\lambda) S(\lambda) \mathrm{d}\lambda$, et trouver un optimum qui tienne compte de la quantité de flux lumineux qui atteint le détecteur, quelle que soit la largeur spectrale du filtre.

Dans les cas décrits ci-dessus, l'utilisation des absorptivités moyennes pour former les coefficients de la matrice d'absorptivité $\varepsilon$ est préférable dans le cas de faibles concentrations de gaz pour lesquelles le régime de l'exponentielle de la loi de Beer-Lambert est linéaire. En effet, la transmittance moyenne n'est pas la moyenne des transmittances, c'est-à-dire :

$$\langle 10^{-\varepsilon_i(\lambda) L C_i} \rangle_\lambda \neq 10^{-\langle \varepsilon_i(\lambda) \rangle_\lambda L C_i}, \qquad (18)$$

De manière avantageuse, il est préférable de ne pas avoir un paramètre $\varepsilon(\lambda).LC$, qui concerne la transmittance du gaz seul, qui soit supérieur à environ 4 % pour garantir que la différence entre l'exponentielle et sa linéarisation reste inférieure à environ 5 %.

Un exemple est décrit ci-dessous pour illustrer les méthodes précédemment décrites.

Cet exemple est mis en oeuvre pour déterminer les caractéristiques de trois filtres d'un capteur NDIR apte à discriminer trois gaz, ici trois hydrocarbures : le méthane $CH_4$, l'éthane $C_2H_6$ et l'éthylène $C_2H_4$. Les spectres d'absorption, c'est-à-dire les coefficients d'absorption spectrale, de ces trois gaz sont représentés sur la figure 2. Cette figure montre que ces spectres d'absorption se recouvrent de manière importante et que le choix des caractéristiques des filtres, notamment les longueurs d'onde de détection sur lesquelles les réponses spectrales des filtres sont destinées à être positionnées, n'est pas évident.

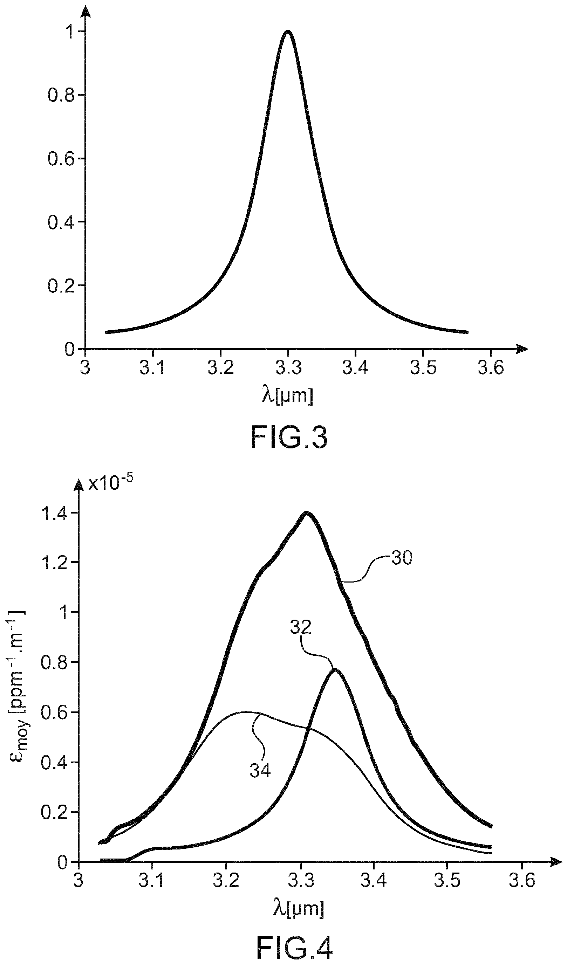

Un filtre Lorentzien, dont le gabarit est représenté sur la figure 3, est par exemple choisi dans cet exemple de mise en oeuvre. Ce gabarit, centré sur $\lambda_i$ et de largeur $\Gamma$ s'exprime selon l'équation :

$$A_i(\lambda) = \frac{1}{1 + \left(\frac{\lambda - \lambda_i}{\Gamma/2}\right)^2} \qquad (19)$$

D'autres types de filtres peuvent être utilisés, par exemple un filtre gaussien.

Les coefficients de la matrice d'absorptivité $\varepsilon$ sont calculés selon l'équation (16) ci-dessus. Les termes $\tilde{\varepsilon}_j(\lambda_i) = \int A_i(\lambda) \varepsilon_j(\lambda) S(\lambda) \mathrm{d}\lambda$ de cette équation correspondent aux produits de convolution de la réponse du filtre avec le spectre d'absorption de chacun des trois gaz et sont représentés sur la figure 4. La référence 30 désigne le produit de convolution du spectre d'absorption du méthane avec le gabarit du filtre représenté sur la figure 3, la référence 32 désigne le produit de convolution du spectre d'absorption de l'éthane avec le gabarit du filtre représenté sur la figure 3, et la référence 34 désigne le produit de convolution du spectre d'absorption de l'éthylène avec le gabarit du filtre représenté sur la figure 3. Une telle convolution a pour effet de lisser les spectres d'absorption des gaz, ce qui permet de choisir une discrétisation spectrale plus grossière, et ainsi de réduire le temps de calcul nécessaire pour calculer le déterminant de valeur maximale de la matrice d'absorptivité $\varepsilon$.

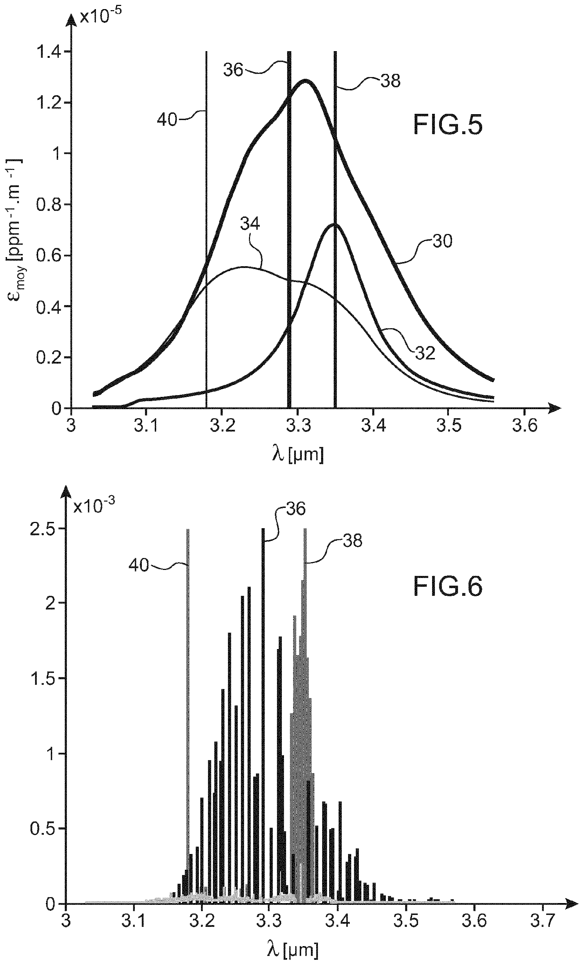

Le déterminant de la matrice d'absorptivité $\varepsilon$ dont les coefficients correspondent aux absorptivités moyennes $\tilde{\varepsilon}_j(\lambda_i)$ est calculé pour plusieurs positions possibles des filtres. Les positions optimales des filtres, qui correspondent aux positions pour lesquelles la valeur de ce déterminant est maximisée, sont calculées et représentées sur la figure 5 dans laquelle ces positions sont superposées aux spectres d'absorption moyennés, et sur la figure 6 dans laquelle ces positions sont superposées aux spectres d'absorption initiaux des gaz. Ainsi, une première longueur d'onde de détection 36 sur laquelle la réponse spectrale d'un premier des trois filtres destiné à détecter le méthane est calculée et est ici égale à environ 3,29 $\mu$m, une deuxième longueur d'onde de détection 38 sur laquelle la réponse spectrale d'un deuxième des trois filtres destiné à détecter l'éthane est calculée et est ici égale à environ 3,35 $\mu$m, et une troisième longueur d'onde de détection 40 sur laquelle la réponse spectrale d'un troisième des trois filtres destiné à détecter l'éthylène est calculée et est ici égale à environ 3,18 $\mu$m. Ces figures 5 et 6 illustrent bien que les positions optimales des filtres, c'est-à-dire les longueurs d'onde de détection sur lesquelles les réponses spectrales des filtres sont positionnées ne correspondent pas toujours aux valeurs maximales des spectres d'absorption des gaz à détecter.

Après le calcul de ces longueurs d'onde de détection, il est possible de calculer les erreurs sur les concentrations en utilisant l'équation (11) précédente à partir d'erreurs de transmission et de concentrations mesurées.

Dans certains cas, il est impossible d'utiliser des filtres possédant une bonne réjection, c'est-à-dire coupant efficacement les longueurs d'onde hors de la bande spectrale choisie. Dans le cas où il reste un fond d'absorption large bande, il est impossible de créer une voie de référence qui soit insensible à la présence des gaz. Il est décrit ci-dessous le cas dans lequel le capteur ne comporte pas de voie de référence ou dans lequel l'une des voies de mesure est utilisée comme voie de référence.

Dans une telle configuration, en considérant deux voies de mesure, la transmittance est alors définie par l'équation suivante :

$$T = \left(\frac{I_{20}}{I_{10}}\right)\left(\frac{I_1}{I_2}\right) = \frac{10^{-\varepsilon_1(\lambda_1)LC}}{10^{-\varepsilon_1(\lambda_r)LC}} = 10^{-[(\varepsilon_1(\lambda_1)-\varepsilon_1(\lambda_r))LC]} \qquad (20)$$

Ici, la deuxième voie est considérée comme la voie de référence, et $\varepsilon_1(\lambda_r)$ est l'absorptivité du premier gaz vue par le filtre associé à cette voie de référence. L'équation (20) est très proche de l'équation (2), la différence étant que le terme $\varepsilon_1(\lambda_1)$ est remplacé par le terme $\varepsilon_1(\lambda_1)$ - $\varepsilon_1(\lambda_r)$). Les étapes des procédés précédemment décrits peuvent donc s'appliquer en considérant, à la place des absorptivités de chacune des voies, les différences entre ces absorptivités et celle de la voie servant de référence.

Lorsque $n$ gaz sont considérés, $n$ filtres de mesure et un filtre de référence indicé r sont utilisés. La matrice d'absorptivité $\varepsilon$ précédemment décrite dans l'équation (6) est dans ce cas remplacée par la matrice suivante :

$$\begin{pmatrix} (\varepsilon_1(\lambda_1) - \varepsilon_1(\lambda_r)) & (\varepsilon_2(\lambda_1) - \varepsilon_2(\lambda_r)) & \cdots & (\varepsilon_n(\lambda_1) - \varepsilon_n(\lambda_r)) \\ (\varepsilon_1(\lambda_2) - \varepsilon_1(\lambda_r)) & (\varepsilon_2(\lambda_2) - \varepsilon_2(\lambda_r)) & \cdots & (\varepsilon_n(\lambda_2) - \varepsilon_n(\lambda_r)) \\ \vdots & \vdots & \ddots \; \vdots \\ (\varepsilon_1(\lambda_n) - \varepsilon_1(\lambda_r)) & (\varepsilon_2(\lambda_n) - \varepsilon_2(\lambda_r)) & \cdots & (\varepsilon_n(\lambda_n) - \varepsilon_n(\lambda_r)) \end{pmatrix} \quad (21)$$

Dans la matrice (21) ci-dessus, le vecteur ligne de l'absorptivité de la voie servant de référence est retranché à toutes les lignes de la matrice d'absorptivité initiale utilisée dans l'équation (6) précédente. Dans la méthode de calcul, cela revient à placer de façon optimale $n$ + 1 filtres de façon à maximiser le déterminant de la matrice (21).

Il est à noter que les meilleurs résultats sont obtenus lorsqu'il est possible d'avoir une voie indépendante de tous les gaz, ce qui correspond à une voie de référence classique. Enfin, lorsque l'une des voies du capteur est utilisée comme voie de référence, le choix d'un filtre spécifique plutôt qu'un autre pour cette voie de référence n'a pas d'influence sur le résultat obtenu.

Dans les exemples précédemment décrits, le capteur utilisé correspond à un capteur comportant une cavité de longueur L connue, tel que le capteur NDIR 10. Toutefois, ces procédés peuvent s'appliquer également à un imageur multi-spectral dans lequel un capteur est par exemple couplé à une roue à filtres tel que décrit dans le document « IR Gas Imaging in an Industrial Setting » de E. Naranjo et al., Proceedings of SPIE - The International Society for Optical Engineering (Impact Factor: 0.2). 04/2010, vol. 7661, pp. 76610K-76610K-8, qui permet de sélectionner, via un choix de filtre, soit une voie active influencée par la présence du gaz, soit une voie de référence. La roue à filtres peut être remplacée par des absorbeurs sélectifs formés au niveau des pixels (résonateurs MIM, filtres pixelliques, etc.).

Dans un tel système d'imagerie, le système optique est passif, et le rayonnement assimilable à celui d'un corps noir situé en arrière-plan est utilisé comme source lumineuse. Le signal mesuré par un pixel filtré par une voie i est proportionnel à un flux reçu $\phi_i$, qui est exprimé par l'équation suivante :

$$\phi_i = \int\left[\phi_{BB}(T_B)T(\lambda) + \phi_{BB}(T_C)\left(1 - T(\lambda)\right)\right]A_i(\lambda)d\lambda \qquad (22)$$

avec $\phi_{BB}$ la luminance du corps noir donnée par la loi de Planck, $T_B$ et $T_C$ respectivement les températures du fond et du gaz, et $A_i(\lambda)$ la réponse spectrale du filtre $i$.

En considérant la différence de flux entre deux pixels adjacents imageant deux zones de températures différentes $T_{B1}$ et $T_{B2}$, un signal $\Delta\Phi_i$, indépendant de la température du gaz est obtenu :

$$\Delta\phi_i = \int\left[\phi_{BB}(T_{B2}) - \phi_{BB}(T_{B1})\right]T(\lambda)A_i(\lambda)d\lambda \qquad (23)$$

A partir du rapport entre le signal mesuré sur une voie active i et une voie de référence j, tel que $T(\lambda)A_j(\lambda) = $

$A_j(\lambda)$ (le gaz n'absorbe pas dans la voie de référence), l'expression suivante proche de l'équation (2) est obtenue :

$$\eta_{ij} = \frac{\int [\phi_{BB}(T_{B2}) - \phi_{BB}(T_{B1})] T(\lambda) A_i(\lambda) d\lambda}{\int [\phi_{BB}(T_{B2}) - \phi_{BB}(T_{B1})] A_j(\lambda) d\lambda} \approx \frac{\widetilde{A_i}}{\widetilde{A_j}} T \tag{24}$$

Les termes $\tilde{A}$ correspondent à des réponses spectrales moyennées sur $\lambda$. En calibrant le rapport $\tilde{A}_i/\tilde{A}_j$, il est donc possible de remonter au produit longueur-concentration à l'aide de l'équation (3).

## Revendications

1. Procédé d'optimisation de valeurs de *n* longueurs d'onde de détection d'un capteur (10) de gaz optique apte à réaliser une détection de *n* gaz différents, comportant la mise en oeuvre des étapes suivantes :

   a) calcul d'une valeur d'un déterminant d'une matrice d'absorptivité $\varepsilon$ dont des coefficients sont représentatifs de l'absorptivité spectrale de chacun des *n* gaz aux *n* longueurs d'onde de détection, l'étape a) étant répétée plusieurs fois en modifiant à chaque fois au moins une des valeurs desdites *n* longueurs d'onde de détection et telle que les valeurs desdites *n* longueurs d'onde de détection soient comprises dans une gamme de valeurs pour laquelle l'absorptivité spectrale d'au moins un des *n* gaz est non nulle ;
   b) détermination des valeurs desdites *n* longueurs d'onde de détection pour lesquelles la valeur du déterminant de la matrice d'absorptivité $\varepsilon$ correspond à la valeur maximale parmi l'ensemble des valeurs calculées lors de l'étape a).

2. Procédé selon la revendication 1, dans lequel :

   - le capteur (10) de gaz optique comporte au moins *n* sources lumineuses laser,
   - les coefficients de la matrice d'absorptivité $\varepsilon$ correspondent, ou sont uniformément proportionnels, aux coefficients d'absorption spectrale de chacun des *n* gaz aux *n* longueurs d'onde de détection, et
   - les valeurs des *n* longueurs d'onde de détection déterminées à l'étape b) correspondent à des longueurs d'onde de faisceaux lumineux aptes à être émis par les *n* sources lumineuses laser.

3. Procédé selon la revendication 1, dans lequel :

   - le capteur (10) de gaz optique comporte au moins une source lumineuse polychromatique (12) et au moins *n* filtres spectraux (22) chacun apte à permettre une détection d'un des *n* gaz,
   - les coefficients de la matrice d'absorptivité $\varepsilon$ correspondent, ou sont uniformément proportionnels, aux coefficients d'absorption spectrale moyens de chacun des *n* gaz, pondérés ou non par des réponses spectrales des *n* filtres spectraux (22), et
   - les valeurs des *n* longueurs d'onde de détection déterminées à l'étape b) correspondent à des longueurs d'onde sur lesquelles les réponses spectrales des *n* filtres spectraux (22) sont positionnées.

4. Procédé selon la revendication 3, dans lequel les coefficients, notés $\tilde{\varepsilon}_j(\lambda_i)$, de la matrice d'absorptivité $\varepsilon$ sont tels que :

$$\tilde{\varepsilon}_j(\lambda_i) = \frac{\int \varepsilon_j(\lambda) A_i(\lambda) S(\lambda) \mathrm{d}\lambda}{\int A_i(\lambda) S(\lambda) \mathrm{d}\lambda}$$

ou tels que :

$$\tilde{\varepsilon}_j(\lambda_i) = \int \varepsilon_j(\lambda) A_i(\lambda) S(\lambda) \mathrm{d}\lambda$$

avec $\lambda_i$ correspondant aux *n* longueurs d'onde de détection, i étant tel que $1 \le i \le n$;
$\varepsilon_j(\lambda)$ correspondant aux coefficients d'absorption spectrale des *n* gaz, j étant tel que $1 \le j \le n$ ;
$A_i(\lambda)$ correspondant aux réponses spectrales des *n* filtres spectraux (22) ;

S(λ) correspondant au spectre d'émission de la source lumineuse (12).

5. Procédé selon la revendication 4, dans lequel :

   - les *n* filtres spectraux (22) sont choisis parmi un ensemble de *m* filtres spectraux, avec *m > n*, dont un gabarit, une valeur de longueur d'onde sur laquelle la réponse spectrale est positionnée et une largeur de la réponse spectrale de chacun des filtres spectraux dudit ensemble de filtres sont prédéterminés, et
   - les valeurs des *n* longueurs d'onde de détection sont choisies parmi les valeurs des longueurs d'onde sur lesquelles les réponses spectrales des filtres spectraux dudit ensemble de filtres sont positionnées.

6. Procédé selon la revendication 3, dans lequel :

   - les n filtres spectraux (22) ont un même gabarit A(λ), et
   - les coefficients, notés $\tilde{\varepsilon}_j(\lambda_i)$, de la matrice d'absorptivité $\varepsilon$ sont tels que :

$$\tilde{\varepsilon}_j(\lambda_i) = \frac{\int A_i(\lambda)\varepsilon_j(\lambda)S(\lambda)\mathrm{d}\lambda}{\int A_i(\lambda)\,S(\lambda)\mathrm{d}\lambda}$$

   ou tels que :

$$\tilde{\varepsilon}_j(\lambda_i) = \int A_i(\lambda)\varepsilon_j(\lambda)S(\lambda)\mathrm{d}\lambda$$

   avec $\lambda_i$ correspondant aux *n* longueurs d'onde de détection, i étant tel que $1 \le i \le n$;
   $\varepsilon_j(\lambda)$ correspondant aux coefficients d'absorption spectrale des *n* gaz, j étant tel que $1 \le j \le n$ ;
   $A_i(\lambda)$ correspondant aux réponses spectrales des *n* filtres spectraux (22) positionnées sur les longueurs d'onde $\lambda_i$ ;
   S(λ) le spectre d'émission de la source lumineuse (12).

7. Procédé selon la revendication 6, dans lequel :

   - les largeurs des réponses spectrales des *n* filtres spectraux (22) sont ajustables,
   - l'itération de l'étape a) est répétée plusieurs fois en modifiant à chaque fois la largeur des réponses spectrales des *n* filtres spectraux (22), et
   - l'étape b) détermine les valeurs des *n* longueurs d'onde de détection pour lesquelles la valeur du déterminant de la matrice d'absorptivité $\varepsilon$ correspond à la valeur maximale parmi l'ensemble des valeurs calculées lors des multiples itérations de l'étape a).

8. Procédé selon l'une des revendications précédentes, dans lequel :

   - le capteur (10) de gaz optique ne comporte pas de voie de référence et comporte *n+1* voies de mesure ;
   - les coefficients de la matrice d'absorptivité $\varepsilon$ correspondent, ou sont uniformément proportionnels, aux coefficients d'absorption spectrale, moyens ou non, de chacun des *n* gaz, pondérés ou non par des réponses spectrales des *n* filtres spectraux (22), auxquels sont soustrait les coefficients d'absorption spectrale d'une des *n+1* voies de mesure du capteur (10) de gaz optique servant de voie de référence.

9. Procédé selon l'une des revendications précédentes, dans lequel les étapes a) et b) sont mises en oeuvre via une méthode d'optimisation de type solveur d'équations par algorithme évolutionnaire.

**Patentansprüche**

1. Verfahren zur Optimierung von Werten von *n* Detektionswellenlängen eines optischen Gassensors (10), der dazu ausgelegt ist, eine Erfassung von *n* verschiedenen Gasen zu realisieren, umfassend die Durchführung der folgenden Schritte:

a) Berechnung eines Werts einer Determinante einer Absorptionsmatrix $\varepsilon$, deren Koeffizienten repräsentativ sind für die spektrale Absorption jedes der $n$ Gase für die $n$ Erfassungwellenlängen, wobei der Schritt a) mehrere Male wiederholt wird, wobei jedes Mal wenigstens einer der Werte der $n$ Erfassungswellenlängen verändert wird, und derart, dass die Werte der $n$ Erfassungswellenlängen in einem Wertebereich enthalten sind, für den die spektrale Absorption wenigstens eines der $n$ Gase ungleich Null ist;

b) Bestimmung der Werte der $n$ Erfassungswellenlängen, für die der Wert der Determinante der Absorptionsmatrix $\varepsilon$ dem Maximalwert aus der Gruppe der im Schritt a) berechneten Werte entspricht.

**2.** Verfahren nach Anspruch 1, wobei:

- der optische Gassensor (10) wenigstens $n$ Laserlichtquellen umfasst,
- die Koeffizienten der Absorptionsmatrix $\varepsilon$ den spektralen Absorptionskoeffizienten jedes der $n$ Gase für die $n$ Erfassungswellenlängen entsprechen oder hierzu gleichmäßig proportional sind, und
- die im Schritt b) bestimmten Werte der $n$ Erfassungswellenlängen Wellenlängen von Lichtstrahlen entsprechen, die dazu ausgelegt sind, durch die $n$ Laserlichtquellen emittiert zu werden.

**3.** Verfahren nach Anspruch 1, wobei:

- der optische Gassensor (10) wenigstens eine polychromatische Lichtquelle (12) und wenigstens $n$ Spektralfilter (22) umfasst, die jeweils dazu ausgelegt sind, eine Erfassung eines der $n$ Gase zu ermöglichen,
- die Koeffizienten der Absorptionsmatrix $\varepsilon$ den mittleren spektralen Absorptionskoeffizienten jedes der $n$ Gase, wohl oder nicht gewichtet mit spektralen Antworten der $n$ Spektralfilter (22) entsprechen oder hierzu gleichmäßig proportional sind, und
- die im Schritt b) bestimmten Werte der $n$ Erfassungswellenlängen Wellenlängen entsprechen, bei denen die spektralen Antworten der $n$ Spektralfilter (22) positioniert sind.

**4.** Verfahren nach Anspruch 3, wobei die Koeffizienten, genannt $\tilde{\varepsilon}_j(\lambda_i)$ der Absorptionsmatrix $\varepsilon$ derart sind, dass:

$$\tilde{\varepsilon}_j(\lambda_i) = \frac{\int \varepsilon_j(\lambda)A_i(\lambda)S(\lambda)\mathrm{d}\lambda}{\int A_i(\lambda)\, S(\lambda)\mathrm{d}\lambda}$$

oder derart, dass:

$$\tilde{\varepsilon}_j(\lambda_i) = \int \varepsilon_j(\lambda)A_i(\lambda)S(\lambda)\mathrm{d}\lambda$$

wobei $\lambda_i$ den $n$ Erfassungwellenlängen entspricht, wobei i derart ist, dass $1 \leq i \leq n$ ;
$\varepsilon_j(\lambda)$ den spektralen Absorptionskoeffizienten der $n$ Gase entspricht, wobei j derart ist, dass $1 \leq j \leq n$ ;
Ai($\lambda$) den spektralen Antworten der $n$ Spektralfilter (22) entspricht;
S($\lambda$) dem Emissionsspektrum der Lichtquelle (12) entspricht.

**5.** Verfahren nach Anspruch 4, wobei:

- die $n$ Spektralfilter (22) ausgewählt sind aus einer Gruppe von $m$ Spektralfiltern mit $m > n,$ von der eine Größe, ein Wert der Wellenlänge, auf der die spektrale Antwort positioniert ist, und eine Breite der spektralen Antwort jedes der spektralen Filter der Gruppe von Filtern vorbestimmt sind, und
- die Werte der $n$ Erfassungswellenlängen ausgewählt sind aus den Werten der Wellenlängen, auf denen die spektralen Antworten der spektralen Filter der Gruppe von Filtern positioniert sind.

**6.** Verfahren nach Anspruch 3, wobei:

- die $n$ spektralen Filter (22) ein und dieselbe Größe A($\lambda$) haben, und
- die Koeffizienten, genannt $\tilde{\varepsilon}_j(\lambda_i)$ der Absorptionsmatrix $\varepsilon$ derart sind, dass:

$$\tilde{\varepsilon}_j(\lambda_i) = \frac{\int A_i(\lambda)\varepsilon_j(\lambda)S(\lambda)d\lambda}{\int A_i(\lambda)\,S(\lambda)d\lambda}$$

oder derart, dass:

$$\tilde{\varepsilon}_j(\lambda_i) = \int A_i(\lambda)\varepsilon_j(\lambda)S(\lambda)d\lambda$$

wobei $\lambda_i$ den $n$ Erfassungswellenlängen entspricht, wobei i derart ist, dass $1 \leq i \leq n$ ;
$\varepsilon_j(\lambda)$ den spektralen Absorptionskoeffizienten der $n$ Gase entspricht, wobei j derart ist, dass $1 \leq j \leq n$ ;
Ai($\lambda$) den spektralen Antworten der $n$ spektralen Filter (22) entspricht, die auf den Wellenlängen $\lambda_i$ positioniert sind ;
S($\lambda$) das Emissionsspektrum der Lichtquelle (12) ist.

7. Verfahren nach Anspruch 6, wobei:

- die Breiten der spektralen Antworten der $n$ spektralen Filter (22) einstellbar sind,
- die Iteration des Schritts a) mehrere Male wiederholt wird, wobei jedes Mal die Breite der spektralen Antworten der $n$ spektralen Filter (22) verändert wird, und
- der Schritt b) die Werte der $n$ Erfassungswellenlängen bestimmt, für die der Wert der Determinante der Absorptionsmatrix $\varepsilon$ dem Maximalwert aus der Gruppe der Werte entspricht, die während der mehreren Iterationen des Schritts a) berechnet werden.

8. Verfahren nach einem der vorhergehenden Ansprüche, wobei:

- der optische Gassensor (10) keinen Referenzweg umfasst und $n+1$ Messwege umfasst;
- die Koeffizienten der Absorptionsmatrix $\varepsilon$ den mittleren oder nichtmittleren spektralen Absorptionskoeffizienten jedes der $n$ Gase, wohl oder nicht gewichtet mit spektralen Antworten der $n$ spektralen Filter (22), von denen die spektralen Absorptionskoeffizienten eines der $n+1$ Messwege des optischen Gassensors (10) subtrahiert werden, der als Referenzweg dient, entsprechen oder hierzu gleichmäßig proportional sind.

9. Verfahren nach einem der vorhergehenden Ansprüche, wobei die Schritte a) und b) durchgeführt werden mittels eines Optimierungsverfahrens vom Typ Gleichungslöser mittels evolutionären Algorithmus.

**Claims**

1. A method for optimising the values of $n$ detection wavelengths of an optical gas sensor (10) capable of carrying out detection of $n$ different gases, comprising the implementation of the following steps:

a) calculation of a value of a determinant of an absorptivity matrix $\varepsilon$ whose coefficients represent the spectral absorptivity of each of the $n$ gases at $n$ detection wavelengths, step a) being repeated several times, each time modifying at least one of said $n$ detection wavelengths and such that the values of said $n$ detection wavelengths are included within a range of values for which the spectral absorptivity of at least one of the $n$ gases is non-zero;
b) determination of the values of said $n$ detection wavelengths for which the value of the determinant of the absorptivity matrix $\varepsilon$ corresponds to the maximum value amongst the set of values calculated in step a).

2. The method according to claim 1, wherein:

- the optical gas sensor (10) comprises at least $n$ laser light sources,
- the coefficients of the absorptivity matrix $\varepsilon$ correspond or are uniformly proportional to the spectral absorption coefficients of each of the $n$ gases at the $n$ detection wavelengths, and
- the values of the $n$ detection wavelengths determined in step b) correspond to the wavelengths of light beams capable of being emitted by the $n$ laser light sources.

3. The method according to claim 1, wherein:

   - the optical gas sensor (10) comprises at least one polychromatic light source (12) and at least $n$ spectral filters (22) each capable of being used for detection of one of the $n$ gases,
   - the coefficients of the absorptivity matrix $\varepsilon$ correspond or are uniformly proportional to the mean spectral absorption coefficients of each of the $n$ gases, weighted or not by the spectral responses of the $n$ spectral filters (22), and
   - the values of the $n$ detection wavelengths determined in step b) correspond to the wavelengths at which the spectral responses of the $n$ spectral filters (22) are located.

4. The method according to claim 3, wherein the coefficients, $\tilde{\varepsilon}_j(\lambda_i)$, of the absorptivity matrix $\varepsilon$ are such that:

$$\tilde{\varepsilon}_j(\lambda_i) = \frac{\int \varepsilon_j(\lambda) A_i(\lambda) S(\lambda) \mathrm{d}\lambda}{\int A_i(\lambda)\, S(\lambda) \mathrm{d}\lambda}$$

   or such that:

$$\tilde{\varepsilon}_j(\lambda_i) = \int \varepsilon_j(\lambda) A_i(\lambda) S(\lambda) \mathrm{d}\lambda$$

   where $\lambda_i$ corresponds to the $n$ detection wavelengths, with i being such that $1 \leq i \leq n$;
   $\varepsilon_j(\lambda)$ corresponds to the spectral absorption coefficients for the $n$ gases, with j being such that $1 \leq j \leq n$;
   $A_i(\lambda)$ corresponds to the spectral responses of the $n$ spectral filters (22);
   $S(\lambda)$ corresponds to the emission spectrum of the light source (12).

5. The method according to claim 4, wherein:

   - the $n$ spectral filters (22) are chosen from amongst a set of $m$ spectral filters, where $m > n$, of which an outline profile, a wavelength value at which the spectral response is located and a width of the spectral response of each of the spectral filters of said set of filters are predetermined, and
   - the values of the $n$ detection wavelengths are chosen from the values of wavelengths at which the spectral responses of the spectral filters of the said set of filters are positioned.

6. The method according to claim 3, wherein:

   - the $n$ spectral filters (22) have the same outline profile $A(\lambda)$, and
   - the coefficients, $\tilde{\varepsilon}_j(\lambda_i)$, of the absorptivity matrix $\varepsilon$ are such that:

$$\tilde{\varepsilon}_j(\lambda_i) = \frac{\int A_i(\lambda) \varepsilon_j(\lambda) S(\lambda) \mathrm{d}\lambda}{\int A_i(\lambda)\, S(\lambda) \mathrm{d}\lambda}$$

   or such that:

$$\tilde{\varepsilon}_j(\lambda_i) = \int A_i(\lambda) \varepsilon_j(\lambda) S(\lambda) \mathrm{d}\lambda$$

   where $\lambda_i$ corresponds to the $n$ detection wavelengths, with i being such that $1 \leq i \leq n$;
   $\varepsilon_j(\lambda)$ corresponds to the spectral absorption coefficients for the $n$ gases, with j being such that $1 \leq j \leq n$;
   where $A_i(\lambda)$ corresponds to the spectral responses of the $n$ spectral filters (22) positioned at the wavelengths $\lambda_i$ ;
   $S(\lambda)$ is the emission spectrum of the light source (12).

7. The method according to claim 6, wherein:

   - the spectral response widths of the $n$ spectral filters (22) are adjustable,
   - the iteration of step a) is repeated several times, each time by modifying the width of the spectral responses of the $n$ spectral filters (22), and
   - step b) determines the values of the $n$ detection wavelengths for which the value of the determinant of the absorptivity matrix $\varepsilon$ corresponds to the maximum value amongst the set of values calculated during the multiple iterations of step a).

8. The method according to one of the previous claims, wherein:

   - the optical gas sensor (10) does not comprise a reference path and comprises $n+1$ measurement paths;
   - the coefficients of the absorptivity matrix $\varepsilon$ correspond, or are uniformly proportional to the spectral absorption coefficients, mean or not, of each of the $n$ gases, weighted or not by the spectral responses of the $n$ spectral filters (22), from which are subtracted the spectral absorption coefficients of one of the $n+1$ measurement paths of the optical gas sensor (10) serving as a reference path.

9. The method according to one of the previous claims, wherein the steps a) and b) are implemented via an optimisation method of the evolutionary algorithm equation solver type.

FIG.1

FIG.2

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5041723 A
- US 4914719 A
- US 5281817 A
- US 6307201 B
- US 20030081204 A

**Littérature non-brevet citée dans la description**

- **C.W. BROWN et al.** Matrix représentations and criteria for selecting analytical wavelengths for multicomponent spectroscopic analysis. *Anal. Chem.,* 1982, vol. 54 (9), 1472-1479
- **C. B. LUCASIUS et al.** Genetic algorithms in wavelength sélection: a comparative study. *Analytica Chimica Acta,* 1994, vol. 286, 135-153
- **Z. XIABAO et al.** Variables sélection methods in near-infrared spectroscopy. *Analytica Chimica Acta,* 2010, vol. 667, 14-32
- Particle Swarm Optimization. **J. KENNEDY et al.** Proceedings., IEEE International Conference on. Neural Networks, 1995, vol. 4, 1942-1948
- **N. HANSEN.** *The CMA évolution strategy : A tutorial*
- **IR GAS IMAGING IN AN INDUSTRIAL SETTING ; DE E. NARANJO et al.** *Proceedings of SPIE - The International Society for Optical Engineering (Impact Factor: 0.2),* Avril 2010, vol. 7661, 76610K-76610K, 8